(19) Europäisches Patentamt
European Patent Office
Office européen des brevets

(11) EP 4 071 514 A1

(12) EUROPEAN PATENT APPLICATION
published in accordance with Art. 153(4) EPC

(43) Date of publication:
12.10.2022 Bulletin 2022/41

(21) Application number: 20895245.7

(22) Date of filing: 27.11.2020

(51) International Patent Classification (IPC):
G01S 17/08 (2006.01)    G01S 7/481 (2006.01)

(52) Cooperative Patent Classification (CPC):
G01S 7/481; G01S 17/08

(86) International application number:
PCT/CN2020/132295

(87) International publication number:
WO 2021/109939 (10.06.2021 Gazette 2021/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.12.2019  CN 201922129657 U
02.12.2019  CN 201922133087 U
02.12.2019  CN 201922132464 U

(71) Applicant: Beijing Roborock Technology Co., Ltd.
Beijing 100085 (CN)

(72) Inventors:
• ZHANG, Zhichun
Beijing 100085 (CN)
• LIU, Xiaoyu
Beijing 100085 (CN)
• PAN, Ke
Beijing 100085 (CN)

(74) Representative: Behr, Wolfgang
Lorenz Seidler Gossel
Rechtsanwälte Patentanwälte
Partnerschaft mbB
Widenmayerstraße 23
80538 München (DE)

(54) **LASER RANGING DEVICE AND ROBOT**

(57) A laser ranging device (1) and a robot. The laser ranging device (1) comprises a transmitting unit (11) and a receiving unit (12). The transmitting unit (11) comprises a transmitter (111) that is used for transmitting a pulsed laser to a target object to undergo ranging and a transmitting lens (113) that is used for allowing the transmitted. pulsed laser to pass through. The receiving unit (12) comprises a light detector (121) that is used for receiving the pulsed laser reflected from the target object and a receiving lens (123) that is used for the reflected pulsed laser to pass through. The light detector (121) is disposed by means of being encapsulated in an encapsulating module (124), the encapsulating module (124) being located behind the receiving lens (123) and opposite the receiving lens (123), and one side thereof facing the receiving lens (123) being constructed as an extinction surface.

FIG. 1

## Description

### CROSS-REFERENCE TO RELATED APPLICATIONS

This application claims priority to Chinese applications No. 201922129657.9, No. 201922133087.0, and No. 201922132464.9 filed on December 02, 2019, which are incorporated herein by reference in their entirety for all purposes.

### TECHNICAL FIELD

The present disclosure generally relates to the technical field of smart household, and more specifically to a laser ranging apparatus and a robot.

### BACKGROUND

In the civil and commercial fields, laser ranging methods used for environment detection and map creation may be generally classified into two types according to technical solutions: a time of flight (TOF) method and a triangular ranging method. The TOF method is insensitive to deformation caused by a temperature change, and its ranging accuracy, especially in a case of long-distance ranging, is higher than that of the triangular ranging method. Currently, TOF is mostly applied to a long-distance ranging scenario, such as drones or automated cars, while the triangular ranging method is mostly used in a relatively short-distance (for example, less than 30 meters) and high-frequency (for example, more than 1000 times/second) ranging scenario in an indoor environment.

This is mainly because an apparatus that uses TOF ranging is relatively expensive, and there are too much reflected stray light during short-distance ranging. As a result, a signal-to-noise ratio of received light is too low, and therefore, ranging precision is relatively poor. One reason for the large amount of stray light reflected during short-distance range finding is that laser light is reflected to a surface (mostly a sliver-gray substrate) of an encapsulating module of an optical receiver from a nearby obstacle for specular reflection, and is reflected inside an optical receiving end by many times before entering a surface of the optical receiver, thereby forming strong light noises.

These factors limit the application of TOF ranging in a relatively short-distance and high-frequency ranging scenario in the indoor environment.

### SUMMARY

A series of concepts in a simplified form are introduced in this section, which will be further described in detail in the description of embodiments section. The summary section of the present disclosure does not imply an attempt to define key features and essential technical features of the claimed technical solutions, nor does it imply an attempt to determine the protection scope of the claimed technical solutions.

An embodiment of the present disclosure provides a laser ranging apparatus, wherein the laser ranging apparatus includes:

an emitting unit, including an emitter configured to emit a laser pulse to a target object that is to be ranged, and an emitting lens configured for the laser pulse to pass through; and

a receiving unit, including a photodetector configured to receive a reflected laser pulse by the target object and a receiving lens configured for the reflected laser pulse to pass through;

wherein the photodetector is encapsulated in an encapsulation module, the encapsulation module is disposed aft of and faces the receiving lens, and a side surface of the encapsulation module facing the receiving lens is constructed as a light extinction surface.

In the laser range finder and the robot according to the embodiment of the present disclosure, a side, of the encapsulating module in which the photodetector is encapsulated, and facing the receiving lens is constructed as a matte surface, to reduce a reflection capability of the surface, thereby reducing or even eliminating stray light to increase a signal-to-noise ratio and facilitating improvement in short-distance high-frequency range finding accuracy of the TOF in an indoor environment.

According to another aspect of the embodiments of the present disclosure, a robot is further provided, and the robot includes the laser ranging apparatus as described above.

In the robot according to the embodiment of the present disclosure, the equipped laser ranging apparatus is applicable to range short-distance at a high-frequency in an indoor environment through the TOF method, and has a high range finding accuracy.

According to another aspect of the embodiments of the present disclosure, a laser ranging apparatus is further provided, and the laser ranging apparatus includes:

an emitting unit comprising an emitter configured to emit a laser pulse to a target object that is to be ranged, and an emitting lens configured for the laser pulse to pass through; and

a receiving unit, comprising a photodetector configured to receive a reflected laser pulse by the target object and a receiving lens configured for the reflected laser pulse to pass through;

wherein the photodetector is a PIN photodiode.

In the laser ranging apparatus according to the embodiment of the present disclosure, the PIN type photodiode may be used as the photodetector of the receiving unit for sensing light in the indoor environment and has a lower cost. In addition, a light filter further may be omitted, so that the cost may be further reduced.

According to another aspect of the embodiments of the present disclosure, a robot is further provided, and the robot includes the laser ranging apparatus as described above.

In the robot according to the embodiment of the present disclosure, the equipped laser range finder has a low cost and is applicable to range in a short-distance at a high-frequency in an indoor environment through the TOF method.

According to another aspect of the embodiments of the present disclosure, a laser ranging apparatus is further provided, and the laser ranging apparatus includes:

a frame, comprising a first optical cavity and a second optical cavity arranged side by side with the first optical cavity;

an emitting unit, comprising an emitter disposed at a rear end of the first optical cavity and an emitting lens disposed at a front end of the first optical cavity, the emitter being configured to emit a laser pulse to the emitting lens;

a receiving unit, comprising a photodetector disposed at a rear end of the second optical cavity and a receiving lens disposed at a front end of the second optical cavity, the photodetector being configured to receive a reflected laser pulse through the receiving lens by the target object; and

a shading mask, disposed at a front side of the frame, a rear surface of the shading mask abutting against the front surface of the frame and isolating the emitting lens from the receiving lens to prevent light interference generated between the emitting unit and the receiving unit.

In the laser ranging apparatus according to the embodiment of the present disclosure, the shading mask is disposed for isolating the emitting lens from the receiving lens to ensure that there is no light interference between the emitting unit and the receiving unit. Moreover, the range finder is compact in structure, so that occupied space of the range finder is further reduced.

According to another aspect of the embodiments of the present disclosure, a robot is further provided, and the robot includes the laser ranging apparatus as described above.

In the robot according to the embodiment of the present disclosure, the equipped laser ranging apparatus may effectively isolate an optical signal between the emitting unit and the receiving unit.

## BRIEF DESCRIPTION OF DRAWINGS

The following accompanying drawings of the present disclosure are used herein as a part of the present disclosure for understanding the present disclosure. The accompanying drawings illustrate embodiments of the present disclosure and descriptions thereof, which are used to explain the principles of the present disclosure. In the accompanying drawings:

FIG. 1 is a three-dimensional view of a laser ranging apparatus according to an optional implementation of the present disclosure;

FIG. 2 is a three-dimensional view of a ranging component of the laser ranging apparatus as illustrated in FIG. 1;

FIG. 3 is a transverse sectional view of the laser ranging assembly as illustrated in FIG. 2;

FIG. 4 is a three-dimensional view of a circuit board of a receiving unit of the laser ranging apparatus as illustrated in FIG. 1;

FIG. 5 is a three-dimensional view of a shading mask of the laser ranging apparatus as illustrated in FIG. 1;

FIG. 6 is another three-dimensional view of a shading mask of the laser ranging apparatus as illustrated in FIG. 1;

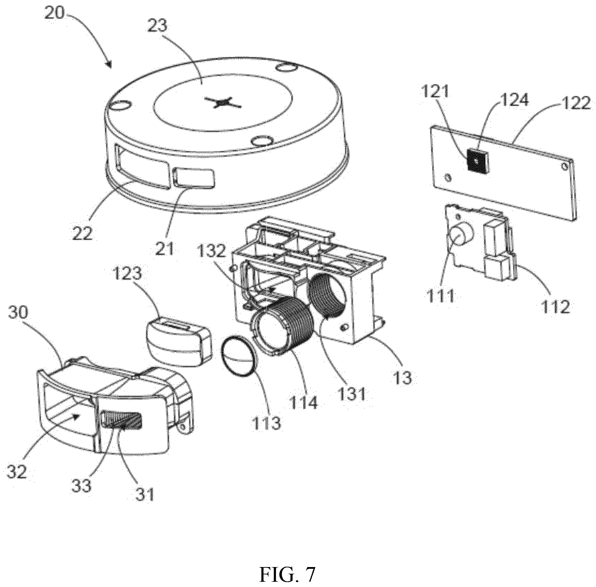

FIG. 7 is an explosive view of the laser ranging apparatus as illustrated in FIG. 1.

## DESCRIPTION OF EMBODIMENTS

In the following description, a large quantity of specific details are provided to provide a more thorough understanding of the technical solutions according to the present disclosure. However, it is obvious to one of ordinary skill in the art that the implementations of the present disclosure may be implemented without the need for one or more of these details. In another example, to avoid confusion with the implementations of the present disclosure, some technical features well-known in the art are not described.

For a thorough understanding of the implementations of the present disclosure, detailed structures will be described hereinafter. Obviously, the implementations of the present disclosure are implemented without being limited to specific details familiar to one of ordinary skill in the art.

The embodiments of the present disclosure provide a laser ranging apparatus, which may emit a laser pulse to a to-be-ranged target object, then receive a laser pulse reflected by the target object, and perform analysis and calculation on the received laser pulse to obtain a distance between the target object and the laser ranging apparatus. The laser ranging apparatus according to the embodiments of the present disclosure is applicable to range in short-distance (for example, less than 30 meters) and at a high-frequency (for example, more than 1000 times/second) ranging in an indoor environment through a TOF method. The following provides descriptions in detail with reference to the accompanying drawings.

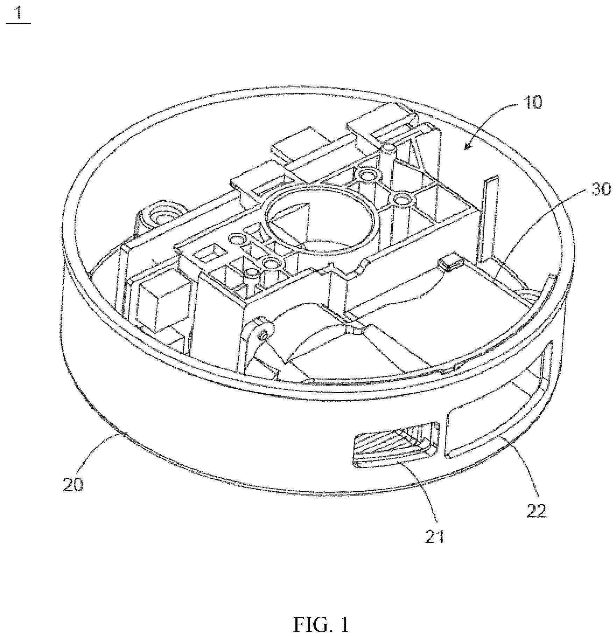

As illustrated in FIG. 1, a laser ranging apparatus 1 according to an optional implementation of the present disclosure mainly includes a ranging component 10 and an outer housing 20. The ranging component 10 is a core component for implementing a ranging function by the laser ranging apparatus 1.

The outer housing 20 is substantively constructed in a pie shape, and is sleeved on an outside of the ranging component 10, so as to fix and protect the component. It may be understood that, in implementations, the outer housing 20 may be constructed in an oval pie shape, a cube shape, or the like. A first opening 21 for an emitted laser pulse to pass through and a second opening 22 for a laser pulse reflected by a to-be-ranged target object to pass through are provided on the outer housing 20.

Although not illustrated in the accompanying drawings, one of ordinary skill in the art may understand that the laser ranging apparatus 1 may further include a fixing base. The outer housing 20 is fastened to the fixing base, a substantially enclosed internal space is formed between the outer housing 20 and the fixing base, and the ranging component 10 is accommodated in the internal space. A mounting structure such as a screw hole or a buckle may be disposed on the fixing base, and the laser ranging apparatus 1 may be mounted and fixed to a robot, a drone, and the like through the mounting structure.

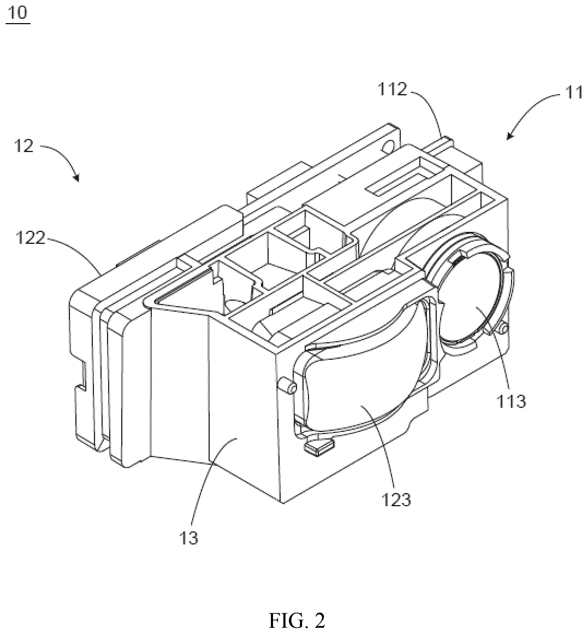

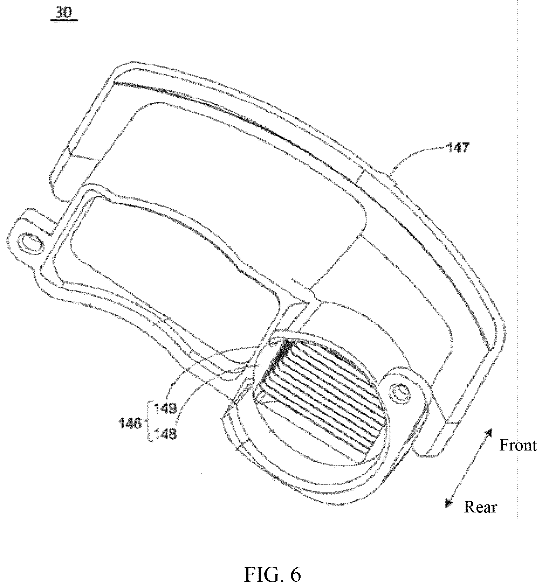

As illustrated in FIG. 2 and FIG. 6, the ranging component 10 includes an emitting unit 11, a receiving unit 12, and a frame 13. The emitting unit 11 and the receiving unit 12 are respectively fixed on the frame 13 to form a whole.

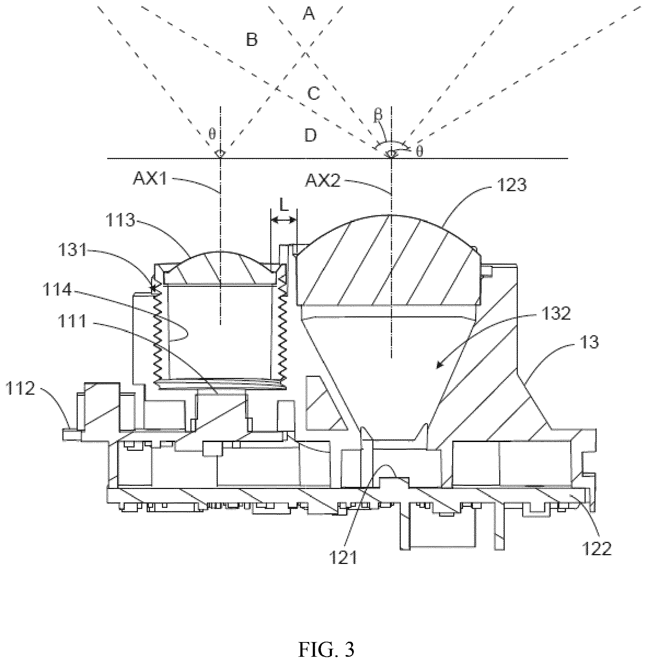

As illustrated in FIG. 3, the emitting unit 11 includes an emitter 111, an emitting circuit board 112, and an emitting lens 113. The emitter 111 is configured to emit a laser pulse for ranging. In an embodiment of the present disclosure, the emitter 111 is constructed as a laser diode. The laser diode is integrated on the emitting circuit board 112. A first optical cavity 131 is provided on the frame 13. The emitting circuit board 112 and the emitting lens 113 are fixed to the frame 13 and are respectively positioned at two ends of the first optical cavity 131. The laser pulse emitted by the emitter 111 may be propagated outward through the emitting lens 113. The emitting lens 113 can focus and collimate the laser pulse that passes through the emitting lens 113. It may be understood that, in another embodiment of the present disclosure, another apparatus that can emit laser pulse may be adopted as an emitter.

According to an embodiment of the present disclosure, the first optical cavity 131 and the second optical cavity 132 are arranged side by side. The first optical cavity 131 may be substantially constructed as a cylindrical channel, the second optical cavity 132 may be substantially constructed as a conical channel, and a cross-sectional area of a front end of the second optical cavity 132 is greater than that of a rear end thereof.

Optionally, the emitting unit 11 further includes an adjuster 114. The emitting lens 113 is mounted on the adjuster 114, and the adjuster 114 is adjustably disposed in the first optical cavity 131 of the frame 13. Therefore, a position of the emitting lens 113 relative to the emitter 111 may be adjusted by changing a position of the adjuster 114 in the first optical cavity 131, so as to adjust and correct an optical path of the emitting unit 11. A position adjustment direction may include a direction in which the laser pulse is emitted and a direction perpendicular to the direction in which the laser pulse is emitted.

In the implementations illustrated in FIG. 3 and FIG. 6, the adjuster 114 has a cylindrical structure. Screw threads are respectively disposed on an outer surface of the adjuster 114 and an inner surface of the first optical cavity 131. The adjuster 114 is movably disposed in the first optical cavity 131 in a thread engagement manner. During correction, the adjuster 114 may be screwed to adjust the position of the emitting lens 113. The adjustment manner is relatively simple. After the emitting lens 113 is adjusted in position, the adjuster 114 and the emitting lens 113 may be fixed in this position through a process such as glue dispensing.

To adapt to ranging in an indoor environment, a center wavelength of the laser pulse emitted by the emitter 111 may be 905 nm or 850 nm. Light of this wavelength may be distinguished from ambient light in a normal indoor environment, which helps to reduce impact of the ambient light and improve ranging accuracy. It should be understood that because a large quantity of stray light with a wavelength close to 850 nm exists outdoors , a laser pulse with a center wavelength of 850 nm is not suitable for use in an outdoor environment, and is relatively suitable for ranging in an indoor environment.

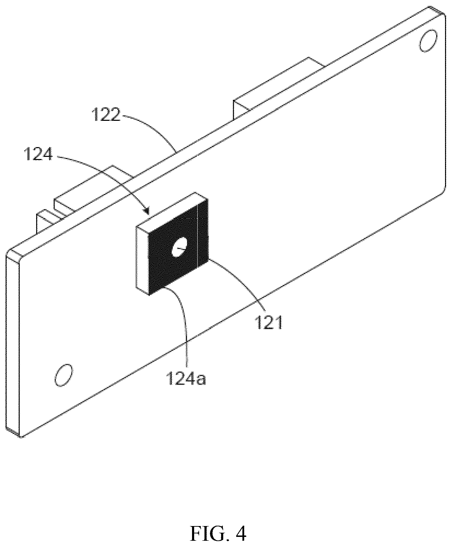

The receiving unit 12 includes a photodetector 121, a receiving circuit board 122, and a receiving lens 123. The photodetector 121 is configured to sense a reflected laser pulse by the target object, and generate a corresponding electric signal to be sent to the receiving circuit board 122. An analysis circuit or the like on the receiving circuit board 122 obtains a distance between the target object and the laser ranging apparatus 1 by analyzing and calculating the photoelectric signal. The photodetector 121 is encapsulated in an encapsulation module 124 as illustrated in FIG. 4 and is integrated on the receiving circuit board 122. In addition, a second optical cavity 132 that is isolated from the first optical cavity 131 is provided on the frame 13. The receiving circuit board 122 and the receiving lens 123 are fixed to the frame 13 and are positioned at two ends of the second optical cavity 132 respectively. The reflected laser pulse by the target object may be focused and collimated by the receiving lens 123 before being sensed by the photodetector 121.

To receive as many reflected laser pulses by the target object as possible, so as to improve received light intensity and increase a signal-to-noise ratio, the receiving unit 12 may be provided with a receiving window which is made as large as possible, that is, the receiving lens 123 is as large as possible. However, as illustrated in FIG. 1 and FIG. 6, the laser ranging apparatus 1 is limited in size due to a mounting space and a miniaturization consideration. It may be understood that the outer housing 20 roughly defines an external contour of the laser ranging apparatus 1. Therefore, a size of the laser ranging apparatus 1 in a thickness direction (that is, the axial direction of the foregoing pie shape) is obviously smaller than a size of the laser ranging apparatus 1 in the direction parallel to an end face 23 of the outer housing 20 (that is, the radial direction of the foregoing pie shape). Therefore, as illustrated in FIG. 2, the receiving lens 123 is disposed so that the size of the receiving lens 123 in a direction parallel to the end face 23 is greater than the size of the receiving lens 123 in the thickness direction, so as to form a receiving window as large as possible. For example, the receiving lens 123 may be constructed to have a projection of a rectangle on a plane perpendicular to an optical axis AX2 (see FIG. 3) of the receiving lens 123, wherein a long side of the rectangle is parallel to the end face 23, and a short side of the rectangle is perpendicular to the end face 23.

In addition, an outer surface of at least one of the emitting lens 113 and the receiving lens 123 is constructed as a free-form surface. That is, the outer surface of the lens meets the following formula:

$$z = \frac{cr^2}{1 + \sqrt{1 - (1 + k)c^2 r^2}} + \sum_{i=1}^{N} \alpha_i r^{2i}$$

In the foregoing formula, z is a value in the thickness direction of the lens, r is a polar coordinate value of any point on the surface, k is a quadratic surface coefficient, and c is a curvature radius of some point on the surface. Multiple $\alpha_i$ are parameters to be set. For example, the free-form surface is a quadratic surface, and has a good focusing and collimation effect. Therefore, a single lens may be used instead of a lens group including multiple lenses. Further, a lens focal length of at least one of the emitting lens 113 and the receiving lens 123 is set to be less than or equal to 50 mm. In addition, the thickness of the receiving lens 123 may be set to be less than or equal to 5mm. In this way, the size of the lens is relatively small, which facilitates miniaturization of the laser ranging apparatus.

The laser ranging apparatus is typically used as a part of a sensing system in an application scenario such as a robot, a drone, or unmanned driving. The robot, the drone, or the like is required to create an environment map according to surrounding environment information sensed by the laser ranging apparatus. Thus, the robot or the drone can plan a moving path on the created environment map and actively avoid obstacles, thereby enabling autonomous movement. Therefore, it is not desirable that there is a dead zone, especially a dead zone nearby, in a ranging scope. In a case that the conventionally disposed laser ranging apparatus is miniaturized, a dead zone usually appears or is even enlarged, which is a natural contradiction that is irreconcilable.

In addition, ranging accuracy is a basic indicator of performance of the laser ranging apparatus. A premise of accurate ranging is that a signal-to-noise ratio can reach a predetermined spec. Otherwise, accurate ranging cannot be implemented. Therefore, increasing a proportion of received laser pulses to the greatest extent to reduce introduction of other optical signal noise is an issue that is required to be considered in an entire optical path design of the laser ranging apparatus.

Generally speaking, design improvement of the laser ranging apparatus is required to solve problems such as dead zone, signal-to-noise ratio, velocity drift, and error control, and consider and balance multiple factors.

FIG. 3 schematically illustrates a field of view θ of the emitting unit 11 and a field of view β of the receiving unit 12. The laser ranging apparatus 1 according to this embodiment of the present disclosure is disposed as follows: The field of view β of the receiving unit 12 is greater than the field of view θ of the emitting unit 11. It may be learned from FIG. 3 that, according to this configuration, an overlapping region between the receiving field of view and the emitting field of view is the sum of region A and region B, and a dead zone between the two is only region D.

In contrast, in a case that the field of view of the receiving unit 12 is the same as the field of view of the emitting unit 11 (both are θ), the overlapping region between the receiving field of view and the emitting field of view is region A, and the dead zone between the two is region C and region D. It may be understood that in a case that the field of view of the receiving unit is less than the field of view of the emitting unit, the overlapping region of the fields of view of the two units further decreases, and the dead zone further increases.

It may be learned that according to the technical solution according to this embodiment of the present disclosure, the receiving unit can have a light field as large as possible, so that the receiving field of view and the emitting field of view can have a relatively large overlapping region, and the dead zone can be reduced or even eliminated. The receiving unit can receive more light, and can further increase a signal-to-noise ratio of a received signal. In addition, if an emitting angle of the emitting unit is relatively small, with limited power, the laser pulse can be sent farther, which facilitates ranging.

In addition, the emitting unit 11 and the receiving unit 12 are arranged at horizontal intervals. As illustrated in FIG. 3, it may be learned that, the larger a distance L between an outer edge of the emitting lens 113 and an outer edge of the receiving lens 123, the larger a distance between the optical axes AX1 and AX2 of the two lenses. Correspondingly, an area of a triangle of region D also gets larger, that is, a larger dead zone between the emitting field of view and the receiving field of view. Therefore, to reduce the dead zone, the distance L between the outer edge of the emitting lens 113 and the outer edge of the receiving lens 123 should be as small as possible. According to the technical solution according to this embodiment of the present disclosure, the distance L between the outer edge of the emitting lens 113 and the outer edge of the receiving lens 123 is set to be less than or equal to 3 mm. In this way, the dead zone between the emitting field of view and the receiving field of view can be reduced as much as possible, so that a near object can be detected to the greatest extent. These features make the laser ranging apparatus according to this embodiment of the present disclosure suitable for ranging in a short-distance and at high-frequency in an indoor environment through the TOF method.

Currently, an avalanche photodiode (APD) is typically used as a photodetector in a laser ranging apparatus that ranges outdoors through the TOF method. This is because the APD has a very large amplification factor, and can capture a relatively weak reflected laser pulse even in an outdoor environment and amplify it for analysis and calculation, so it is suitable for laser ranging in the outdoor environment. However, while amplifying the reflected laser pulse, the APD also amplifies ambient light noise received by the APD by an identical amplification factor. Therefore, typically, an optical filter is required to filter the amplified ambient optical noise, so as to avoid impact on analysis and calculation results and resulting in inaccurate ranging.

According to the laser ranging apparatus 1 according to an embodiment of the present disclosure, an ordinary positive-intrinsic-negative (PIN) photodiode may be used as the photodetector 121. The price of the PIN photodiode is relatively low, so that costs of the laser ranging apparatus 1 can be reduced.

Further, the amplification factor of the PIN photodiode is far less than the amplification factor of the APD detector. During ranging, even if the PIN photodiode amplifies the laser pulse reflected by the target object and the ambient light noise through an identical amplification factor, the amplified ambient light noise is still below a passing threshold of the PIN photodiode because the amplification factor is relatively small, and therefore cannot pass through the PIN photodiode. In this way, the PIN photodiode substantially functions to filter the ambient light. Therefore, the laser ranging apparatus according to this embodiment of the present disclosure may not include an optical filter, thereby further reducing costs. That is, the laser ranging apparatus according to this embodiment of the present disclosure may replace the APD and the optical filter with a low-cost PIN photodiode, and can still obtain a relatively high signal-to-noise ratio, so as to simplify design of an optical path and a circuit of the laser ranging apparatus at lower costs and lower difficulties in design and implementation. The simplification of an optical receive end also benefits from the design of the entire optical path, so that an optical signal received by the receive end is strong enough and the ambient light noise is weak enough.

In addition, in a high-frequency environment, a filter capacitor electrically connected to the PIN photodiode may be further disposed, and high-frequency noise is filtered out in an alternating current blocking manner, so as to ensure ranging accuracy.

As illustrated in FIG. 4, the photodetector 121 is encapsulated in an encapsulation module 124. The encapsulation module 124 is disposed opposite to the receiving lens 123, being separated by the second optical cavity 132, so that the laser pulse reflected by the target object can be sensed by the photodetector 121. During ranging, a laser pulse reflected by a near obstacle (for example, within a range of 30 cm) has relatively strong light intensity. After passing through the receiving lens 123 to enter the second optical cavity 132, the laser pulse is reflected by an outer surface of the encapsulation module 124 of the receiving unit 12, causing stray light to be formed. Typically, the outer surface of the encapsulation module 124 is a light-toned metal substrate such as silver gray, and stray light reflected by the outer surface of the encapsulation module 124 may cause an increase in a pulse width of light received by the photodetector 121. The pulse width of light herein represents a pulse signal whose horizontal axis indicates time and vertical axis is a voltage that indicates energy. Regarding a ranging principle, the time of flight (TOF) performs ranging based on a time difference between laser pulse emitted and received. However, a calculation method of the time difference is closely related to a start position and an end position of the pulse width of light, and does not simply select a middle position of the pulse width of light for calculation. Therefore, the increase in the light pulse width may lead to inaccurate ranging.

To reduce the interference due to stray light on short-distance ranging, as illustrated in FIG. 4, at least an outer surface 124a, that faces the receiving lens 123, of the encapsulation module 124 in which the photodetector 121 is encapsulated, is disposed as a light extinction surface, so as to reduce reflection of the outer surface 124a, thereby weakening or even eliminating stray light, and preventing the stray light from interfering with TOF ranging, facilitating improving the signal-to-noise ratio .

In an embodiment of the present disclosure, a light extinction material may be coated on the outer surface 124a. For example, a light extinction agent such as a polyacrylate resin or another light extinction powder or a light extinction paint may be coated on the outer surface 124a to form a light extinction surface, which is configured to perform light extinction. Alternatively, a light extinction membrane may be covered on the outer surface 124a. Alternatively, a dark (for example, black) substrate may be directly used to make outer packing of the encapsulation module 124, so that at least the outer surface 124a is formed as a light extinction surface.

It may be learned from the foregoing description that the distance between the outer edge of the receiving lens 123 and the outer edge of the emitting lens 113 of the laser ranging apparatus 1 according to this embodiment of the present disclosure may be a maximum of 3 mm. Therefore, in a case that a part of the laser pulse emitted by the emitting unit 11 has not yet been emitted to an external target object, a case that the laser pulse is received by the receiving unit 12 through reflection of an internal component easily occurs. Therefore, strong light noise is caused; consequently, a signal-to-noise ratio is greatly reduced, and ranging cannot be achieved.

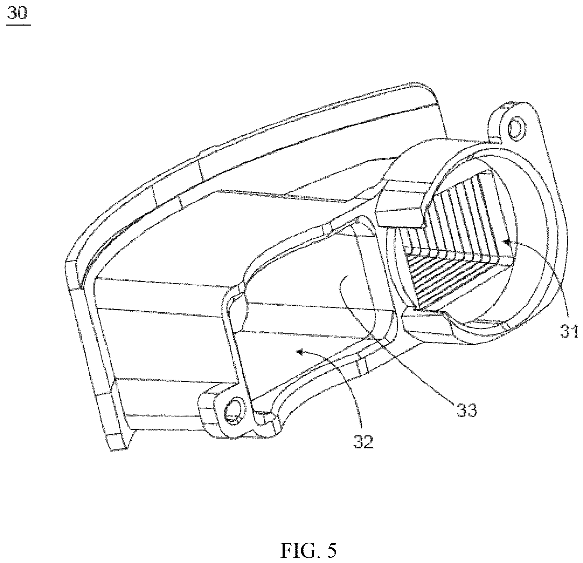

To avoid occurrence of the foregoing case, as illustrated in FIG. 1 and FIG. 5, the laser ranging apparatus 1 according to an embodiment of the present disclosure further includes a shading mask 30. The shading mask 30 has a first channel 31 and a second channel 32, and is disposed between the ranging component 10 and the outer housing 20. Two ends of the first channel 31 are respectively connected to the emitting lens 113 and a first opening 21 of the outer housing 20, and two ends of the second channel 32 are respectively connected to the receiving lens 123 and a second opening 22 of the outer housing 20. In addition, a light barrier wall 33 that is not transparent to light is disposed between the first channel 31 and the second channel 32 to completely isolate the first channel 31 from the second channel 32. In this way, the laser pulse emitted by the emitting unit 11 can only be propagated to the outside through the first channel 31 and the first opening 21 after passing through the emitting lens 113, and cannot be reflected to the receiving lens 123 inside the laser ranging apparatus 1, thereby avoiding a decrease in the signal-to-noise ratio caused by internal reflection, and improving accuracy of TOF ranging. In an embodiment of the present disclosure, the shading mask 30 may be detachably mounted to the laser ranging apparatus, and the shading mask may be made of materials such as a resin.

In an embodiment of the present disclosure, a cross-sectional area of a first channel 31 may be constructed to gradually reduce from a front end to a rear end. A protection means, for example, a bumper capable of preventing the housing from being collided, may be disposed outside the housing 20. In the embodiment of the present disclosure, the bumper is disposed outside the housing 20 and can move between a first position and a second position. When contacting an obstacle, the bumper moves to the second position from the first position. The bumper may move within a range relative to the housing 20, and therefore laser pulses emitted by the emitter 111 need to prevent from being incident onto the bumper. With this structure of the first channel 31, the laser pulses emitted by the emitter 111 may be restricted within a range to prevent the laser pulses from being incident onto the protection means. In addition, a cross-sectional area of a second channel 32 may be constructed to gradually increase from the front end to the rear end.

In the embodiment of the present disclosure, in a case that the shading mask 30 is detachably mounted to the laser ranging apparatus, the light barrier wall 33 may include a first step portion 146 at a rear end and a second step portion 147 at a front end to further prevent the emitting unit 11 and the receiving unit 12 from light interference, where a front surface of the frame 13 abuts against the first step portion 146.

As illustrated in FIG. 6, the first step portion 146 may include a first surface 148 and a second surface 149 aft of the first surface 148, where the front surface of the frame 13 abuts against the second surface 149. The second step portion 147 may abut against an inner surface of the housing 20. In the embodiment of the present disclosure, the first surface 148 is parallel to the second surface 149. In practice, the first surface 148 may alternatively be not parallel to the second surface 149.

In a working environment of the laser ranging apparatus, stray light may affect the emitting unit 11, and a light extinction structure may be disposed on an inner surface of the first channel 31 to reduce the influence. As illustrated in FIG. 5, in an embodiment of the present disclosure, an inner surface of the first channel 31 may be provided with a plurality of light extinction recesses, to reflect, at different angles, light radiated thereon, so as to diffuse strength of an emitted light beam, thereby avoiding a problem that a great number of direct light beams are reflected in the same direction to cause signal interference. The light extinction recesses may extend in a circumference of the inner surface of the first channel 31. The plurality of light extinction recesses may be evenly spaced in a length direction (namely, the front and rear direction) of the first channel 31. It should be understood by one of ordinary skill in the art that the structures of the light extinction recesses are not limited to this implementation, and the light extinction recesses further may be grooves of other structure according to practical requirements.

In an embodiment not shown in the present disclosure, the light extinction structure may be a protrusion disposed on the inner surface of the first channel 31. For example, the protrusion may extend in the circumference of the inner surface of the first channel 31, and a plurality of protrusions may be evenly spaced in the length direction (namely, the front and rear direction) of the first channel 31.

Another embodiment of the present disclosure provides a robot. The robot may include the foregoing laser ranging apparatus, can obtain and create a map of an indoor environment through the laser ranging apparatus through TOF ranging in an indoor environment, and move autonomously according to the created map.

In an embodiment of the present disclosure, the robot is an intelligent cleaning device that moves autonomously on the ground to perform a cleaning operations. For example, the intelligent cleaning device may be a sweeping robot, a mopping robot, or a sweeping and mopping robot. The intelligent cleaning device may include a cleaning system, a sensing system, a control system, a drive system, and the like. The sensing system is used by the intelligent cleaning device to sense an external environment such as a terrain. The laser ranging apparatus forms a part of the sensing system, and may be disposed at the front or top of the intelligent cleaning device. The control system controls the drive system based on a sensing result of the sensing system to drive the intelligent cleaning device to move autonomously, and selectively control the cleaning system to perform the cleaning operation.

In the laser ranging apparatus and the robot according to the embodiments of the present disclosure, a side, of the encapsulating module in which the photodetector is encapsulated, and facing the receiving lens is constructed as a matte surface, to reduce a reflection capability of the surface, thereby reducing or even eliminating nearby stray light to increase a signal-to-noise ratio and facilitating improvement in short-distance high-frequency range finding accuracy of the TOF in an indoor environment.

In the laser ranging apparatus and the robot according to an embodiment of the present application.

Unless defined otherwise, the technical and scientific terms used in the present disclosure have the same meanings as those understood by one of ordinary skill in the art to which the present disclosure pertains. The terms used in the present disclosure are merely intended to describe specific implementation purposes but are not intended to limit the scope of the present disclosure. Terms such as "dispose" that appear in the present disclosure may indicate that one component is directly attached to another component, or may indicate that one component is attached to another component by using a middleware. A feature described in one embodiment in the present disclosure may be applied to another embodiment alone or in combination with another feature, unless the feature is not applicable in the another embodiment or is otherwise described.

The present disclosure has been described by using the foregoing embodiments, but it should be understood that the foregoing embodiments are merely used for example and description purposes, and are not intended to limit the present disclosure to the scope of the described embodiments. One of ordinary skill in the art may understand that further variations and modifications may be made according to the teachings of the present disclosure, and these variations and modifications fall within the protection scope claimed by the present disclosure.

**Claims**

1. A laser ranging apparatus, comprising:

   an emitting unit, comprising an emitter configured to emit a laser pulse to a target object that is to be ranged, and an emitting lens configured for the laser pulse to pass through; and
   a receiving unit, comprising a photodetector configured to receive a reflected laser pulse by the target object and a receiving lens configured for the reflected laser pulse to pass through;
   wherein the photodetector is encapsulated in an encapsulation module, the encapsulation module is disposed aft of and faces the receiving lens, and a side surface of the encapsulation module facing the receiving lens is constructed as a light extinction surface.

2. The laser ranging apparatus according to claim 1, wherein the light extinction surface is formed by coating a light extinction material on the side surface of the encapsulation module.

3. The laser ranging apparatus according to claim 1, wherein the light extinction surface is formed by covering a light extinction membrane on the side surface of the encapsulation module.

4. The laser ranging apparatus according to claim 1, wherein at least one side of the encapsulation module facing the receiving lens is made of a black substrate.

5. The laser ranging apparatus according to claim 1, wherein a field of view of the receiving unit is greater than a field of view of the emitting unit.

6. The laser ranging apparatus according to claim 1, wherein a spacing between an outer edge of the receiving lens and an outer edge of the emitting lens is less than or equal to 3mm.

7. The laser ranging apparatus according to claim 1, wherein the photodetector is a PIN photodiode.

8. The laser ranging apparatus according to claim 1, further comprising a shading mask having a first channel and a second channel, wherein the first channel and the second channel are isolated from each other through a light barrier wall, the emitting lens is connected to the first channel, the laser pulse emitted by the emitting unit is emitted sent to the outside of the laser ranging apparatus by through the first channel, the receiving lens is connected to the second channel, and the reflected pulse laser pulse by reflected from the target object is received by the receiving unit by through the second channel.

9. The laser ranging apparatus according to claim 1, wherein at least one of the emitting lens and the receiving lens is monolithic lens.

10. The laser ranging apparatus according any one of claims 1 to 9, wherein the laser ranging apparatus is a TOF ranging apparatus.

11. A robot, comprising the laser ranging apparatus according to any one of claims 1 to 10.

12. A laser ranging apparatus, comprising:

an emitting unit comprising an emitter configured to emit a laser pulse to a target object that is to be ranged, and an emitting lens configured for the laser pulse to pass through; and
a receiving unit, comprising a photodetector configured to receive a reflected laser pulse by the target object and a receiving lens configured for the reflected laser pulse to pass through;
wherein the photodetector is a PIN photodiode.

13. A robot, comprising the laser ranging apparatus according to claim 12.

14. A laser ranging apparatus, comprising:

a frame, comprising a first optical cavity and a second optical cavity arranged side by side with the first optical cavity;
an emitting unit, comprising an emitter disposed at a rear end of the first optical cavity and an emitting lens disposed at a front end of the first optical cavity, the emitter being configured to emit a laser pulse to the emitting lens;
a receiving unit, comprising a photodetector disposed at a rear end of the second optical cavity and a receiving lens disposed at a front end of the second optical cavity, the photodetector being configured to receive a reflected laser pulse through the receiving lens by the target object; and
a shading mask, disposed at a front side of the frame, a rear surface of the shading mask abutting against the front surface of the frame and isolating the emitting lens from the receiving lens to prevent light interference generated between the emitting unit and the receiving unit.

15. A robot, comprising the laser ranging apparatus according to claim 12.

1

FIG. 1

10

FIG. 2

FIG. 3

FIG. 4

30

FIG. 5

FIG. 6

FIG. 7

## INTERNATIONAL SEARCH REPORT

| International application No. |
|---|
| **PCT/CN2020/132295** |

**A. CLASSIFICATION OF SUBJECT MATTER**

G01S 17/08(2006.01)i; G01S 7/481(2006.01)i

According to International Patent Classification (IPC) or to both national classification and IPC

**B. FIELDS SEARCHED**

Minimum documentation searched (classification system followed by classification symbols)

G01S 17/-; G01S 7/-

Documentation searched other than minimum documentation to the extent that such documents are included in the fields searched

Electronic data base consulted during the international search (name of data base and, where practicable, search terms used)

CNABS, CNKI, EPODOC, WPI: 石头世纪科技股份有限公司, 机器人, 激光, 雷达, 距离, 测距, 光, 检测, 探测, 发射, 接收, 透镜, PIN, 封装, 消光, 吸光, 涂, 黑, 电路板, PCB, light, laser, optical, radar, rangefinder, lidar, distance, range, detect, receiv+, transmit, send, lens

**C. DOCUMENTS CONSIDERED TO BE RELEVANT**

| Category* | Citation of document, with indication, where appropriate, of the relevant passages | Relevant to claim No. |
|---|---|---|
| PX | CN 110988898 A (BEIJING STONE CENTURY TECHNOLOGY CO., LTD.) 10 April 2020 (2020-04-10)<br>claims 1-10, description paragraphs [0004]-[0053], figures 1-6 | 1-15 |
| PX | CN 211826511 U (BEIJING STONE CENTURY TECHNOLOGY CO., LTD.) 30 October 2020 (2020-10-30)<br>claims 1-12, description paragraphs [0007]-[0056], figures 1-6 | 1-15 |
| PX | CN 211826513 U (BEIJING STONE CENTURY TECHNOLOGY CO., LTD.) 30 October 2020 (2020-10-30)<br>claims 1-12, description paragraphs [0006]-[0055], figures 1-6 | 1-15 |
| X | CN 205229458 U (YU, Chunyu) 11 May 2016 (2016-05-11)<br>description, paragraphs [0030]-[0038], and figure 1 | 12,13,15 |
| Y | CN 207408583 U (CHENGDU WEIGUANGYUN TECHNOLOGY CO., LTD.) 25 May 2018 (2018-05-25)<br>description, paragraphs [0015]-[0020], and figures 1-4 | 1-11 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 February 2021** | **02 March 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/132295**

## C.  DOCUMENTS CONSIDERED TO BE RELEVANT

| Category* | Citation of document, with indication, where appropriate, of the relevant passages | Relevant to claim No. |
|---|---|---|
| Y | CN 206223977 U (SHENZHEN GIONEE COMMUNICATION EQUIPMENT CO., LTD.) 06 June 2017 (2017-06-06)<br>        description, paragraphs [0020]-[0021] | 1-11 |
| Y | CN 205229458 U (YU, Chunyu) 11 May 2016 (2016-05-11)<br>        description, paragraphs [0030]-[0038], and figure 1 | 7 |
| X | CN 207408583 U (CHENGDU WEIGUANGYUN TECHNOLOGY CO., LTD.) 25 May 2018 (2018-05-25)<br>        description, paragraphs [0015]-[0020], and figures 1-4 | 14 |
| A | WO 9219984 A1 (VALTION TEKNILLINEN TUTKIMUSKESKUS) 12 November 1992 (1992-11-12)<br>        entire document | 1-15 |

Form PCT/ISA/210 (second sheet) (January 2015)

INTERNATIONAL SEARCH REPORT
Information on patent family members

International application No.

**PCT/CN2020/132295**

| Patent document cited in search report | | | Publication date (day/month/year) | Patent family member(s) | | | Publication date (day/month/year) |
|---|---|---|---|---|---|---|---|
| CN | 110988898 | A | 10 April 2020 | None | | | |
| CN | 211826511 | U | 30 October 2020 | None | | | |
| CN | 211826513 | U | 30 October 2020 | None | | | |
| CN | 205229458 | U | 11 May 2016 | None | | | |
| CN | 207408583 | U | 25 May 2018 | None | | | |
| CN | 206223977 | U | 06 June 2017 | None | | | |
| WO | 9219984 | A1 | 12 November 1992 | FI | 91999 | B | 31 May 1994 |
| | | | | CA | 2081841 | A1 | 01 May 1994 |
| | | | | EP | 0608233 | A1 | 03 August 1994 |
| | | | | FI | 912140 | A | 04 November 1992 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201922129657
- CN 201922133087
- CN 201922132464